# EUROPÄISCHE PATENTANMELDUNG

(11) **EP 4 647 363 A1**
(43) Veröffentlichungstag der Anmeldung: **12.11.2025**
(21) Anmeldenummer: 25173059.4
(22) Anmeldetag: 29.04.2025
(51) Int. Cl.: B65F 3/00, B65F 3/02, B65F 3/14, G06V 20/58

(54) **ABFALLSAMMELFAHRZEUG**

(30) Priorität: 07.05.2024 DE 102024112784
(71) Anmelder: FAUN Umwelttechnik GmbH & Co. KG, 27711 Osterholz-Scharmbeck (DE)
(72) Erfinder: Hermanspann, Patrick, 28359 Bremen (DE); Schelling, Bastian, 28790 Schwanewede (DE)
(74) Vertreter: Regler, Markus Egid

(57) **Zusammenfassung**

Die Erfindung betrifft Abfallsammelfahrzeug mit zumindest einer aktivierbaren Komponente, zumindest einem optischen Sensor zur Überwachung eines Raumbereichs, vorzugsweise am Heck des Abfallsammelfahrzeugs, einer Steuerung zum Ansteuern der aktivierbaren Komponente, die dazu eingerichtet ist, die eine oder mehrere aktivierbare Komponenten zu aktivieren oder zu desaktivieren, sobald durch den optischen Sensor eine vorgesehene Körpergeste einer Bedienperson identifiziert ist.

Dadurch wird die Tätigkeit der Bedienpersonen erleichtert und die Effizienz des Abfallsammelfahrzeugs im Betrieb gesteigert.

## Beschreibung

Die Erfindung betrifft ein Abfallsammelfahrzeug mit den Merkmalen des Patentanspruchs 1.

Die Komponenten eines Abfallsammelfahrzeuges werden in vielen Fällen manuell bedient. Beispielsweise werden Trittbretter durch eine Bedienperson manuell in eine betretbare oder eine nicht betretbare Position gebracht, insbesondere geklappt. Ein heruntergeklapptes Trittbrett hat normgemäß Auswirkungen auf den Betrieb des Abfallsammelfahrzeugs, Rückwärtsfahrt ist nicht möglich, die Maximalgeschwindigkeit ist beschränkt. Für längere Fahrten zwischen Sammelgebieten muss daher das Trittbrett regelmäßig in die nicht betretbare Position gebracht werden. Je nach Sammelfahrt kann das mehrere hundert Mal pro Tag notwendig sein. Das bedeutet zusätzliche körperliche Belastung, zusätzliche Arbeitsschritte und eine Reduzierung der Produktivität.

Gleiches gilt für andere bewegte Komponenten des Abfallsammelfahrzeugs, etwa der Kompaktierungsmechanismus oder eine Hub-Kipp-Vorrichtung. Diese können zwar automatisch betrieben werden, dennoch ist mehrfach pro Sammelfahrt eine manuelle Aktvierung notwendig.

Es ist die Aufgabe der vorliegenden Erfindung, die vorgenannten Nachteile zu überwinden und ein verbessertes Abfallsammelfahrzeug vorzuschlagen.

Die Aufgabe wird gelöst mit einem Abfallsammelfahrzeug mit den Merkmalen von Patentanspruch 1. Bevorzugte Ausgestaltungen der Erfindung sind Gegenstand der abhängigen Ansprüche.

Die Erfindung betrifft ein Abfallsammelfahrzeug mit zumindest einer aktivierbaren Komponente, zumindest einem optischen Sensor zur Überwachung eines Raumbereichs, vorzugsweise am Heck des Abfallsammelfahrzeugs, einer Steuerung zum Ansteuern der aktivierbaren Komponente, die dazu eingerichtet ist, die eine oder mehrere aktivierbare Komponenten zu aktivieren oder zu desaktivieren, sobald durch den optischen Sensor eine vorgesehene Körpergeste einer Bedienperson identifiziert ist.

Durch die Erfindung entfällt das Betätigen eines Schalters oder das manuelle Betätigen einer aktivierbaren Komponente. Vielmehr kann mit einer einfachen Körpergeste situationsgerecht und ohne ergonomische Nachteile die aktivierbare Komponente aktiviert oder desaktiviert werden. Dabei ist der genaue Standort der Bedienperson nicht relevant, vielmehr kommt es nur auf die Körpergeste an, die von dem Sensor identifiziert wird. Es ist nicht mehr notwendig, den Weg zu einem Schalter zurückzulegen, um die Komponente zu aktivieren oder zu desaktivieren. Vielmehr kann die Körpergeste im gesamten überwachten Raumbereich erfolgen. Der Raumbereich kann bedarfsgerecht ausgewählt werden und im Falle eines Heckladers beispielsweise den Heckbereich des Fahrzeugs vollständig oder auch nur in Teilabschnitten umfassen.

Insbesondere die Desaktivierung der Komponente durch eine Körpergeste kann als Notabschaltung ausgeführt werden. Tritt eine Gefahrensituation für eine Bedienperson ein, muss nicht der Notausschalter betätigt werden, den zu erreichen wertvolle Zeit kostet.

Die Steuerung umfasst dabei die Ansteuerung der jeweiligen Komponenten, die beispielsweise hydraulisch, elektrisch oder elektrohydraulisch bewegt werden, und es sind dort die vorgesehenen Körpergesten hinterlegt zusammen mit der Aktivität die sie auslösen.

Weiterhin kann vorgesehen sein, dass die die Identifizierung von Körpergesten nur erfolgt, wenn sich das Abfallsammelfahrzeug in einem Arbeitsmodus befindet, also wenn es sich auf einer Sammelfahrt zur Leerung von Abfallsammelbehältern befindet und nicht beispielsweise während einer Überführungsfahrt.

Die Vorteile der Erfindung liegen insbesondere in der Zeitersparnis durch eingesparte Wege und somit einhergehende höhere Produktivität sowie in der besseren Ergonomie durch geringere körperliche Belastung.

Vorzugsweise handelt es sich bei der aktivierbaren Komponente um ein Trittbrett, eine Hub-Kipp-Vorrichtung oder einen Kompaktierungsmechanismus.

Weiterhin bevorzugt ist der zumindest eine optische Sensor oberhalb einer Einfüllöffnung des Abfallsammelfahrzeuges angeordnet. Dadurch ist eine Überwachung des ausgewählten Raumbereichs möglich, ohne dass dies durch Bauteile des Abfallsammelfahrzeugs gestört wird. Es muss auch kein besonders ausgezeichneter Bereich aufgesucht werden, um die Körpergeste zu vollführen.

Zusätzlich können auch weitere optische Sensoren angeordnet sein, um Redundanz zu schaffen oder um einen vorgesehenen Raumbereich vollständig erfassen zu können. Vorzugsweise überlappen sich die Erfassungsbereiche der optischen Sensoren vollständig oder teilweise.

Weiterhin bevorzugt ist der zumindest eine optische Sensor als Kamera, insbesondere als 3D-Kamera ausgeführt.

Eine weitere bevorzugte Ausführung der Erfindung sieht vor, dass die aus dem überwachten Raumbereich erhaltenen Signale des Sensors mit Hilfe Künstlicher Intelligenz ausgewertet werden. Das mit entsprechenden Daten trainierte System kann die Körpergesten unterschiedlicher Bedienpersonen erkennen und auch die nicht akkurate Ausführung der Körpergeste führt zum gewünschten Ergebnis. Der Einsatz von Künstlicher Intelligenz führt daher zu verbesserter Funktionalität und Sicherheit.

Die Interaktion eines Kamerasystems, der Künstlichen Intelligenz und der aktivierbaren Komponente übernimmt die Steuerung des Abfallsammelfahrzeugs.

Weiterhin bevorzugt ist die Körpergeste zumindest aus nachfolgenden Möglichkeiten ausgewählt:
- Ergreifen eines Handgriffs
- Wischbewegung mit der Hand im überwachten Raumbereich
- Antippen des Trittbretts mit dem Fuß
- Aufwärts-, Abwärts- und/oder Seitwärtsbewegung eines oder beider Hände und/oder Arme
- Kreuzen der Arme
- Herantreten an das Trittbrett
- Fingergeste.

Die Auflistung ist nicht abgeschlossen. Insbesondere können auch mehrere Körpergesten miteinander kombiniert werden oder in eine vorgesehenen Abfolge erfolgen. Es können für die Aktivierung und Desaktivierung unterschiedlicher aktivierbarer Komponenten unterschiedliche Körpergesten vorgesehen sein.

Eine bevorzugte Ausführung der Erfindung betrifft ein Abfallsammelfahrzeug mit einem motorisch betriebenen Trittbrett, das von einer nicht betretbaren in eine betretbare Position und umgekehrt bewegbar ist, zumindest einem optischen Sensor zur Überwachung eines Raumbereichs oberhalb des Trittbretts, einer Steuerung zum Ansteuern des motorisch betriebenen Trittbretts, die dazu eingerichtet ist, das Trittbrett von der nicht betretbaren in die betretbare Position und/oder umgekehrt zu bewegen, sobald durch den optischen Sensor eine vorgesehene Körpergeste einer Bedienperson identifiziert ist.

Das motorisch angetriebene Trittbrett wechselt die beiden Endlagen, also die nicht betretbare, insbesondere hochgeklappte, Position, und die betretbare, insbesondere heruntergeklappte Position, getrieben durch einen vorzugsweise drehmomentbegrenzten Antriebsmotor. Vorzugsweise ist der Antrieb ein Elektromotor.

Der überwachte Raumbereich umfasst vorzugsweise den Arbeitsbereich der Bedienperson inklusive des Bereichs oberhalb des Trittbretts und wird vorzugsweise durch ein Kamerasystem überwacht.

Durch die Bewertung der Signale des optischen Sensors, insbesondere der Bilder des Kamerasystems werden das Verhalten und/oder Gesten der Bedienperson erkannt, die darauf schließen lassen, dass diese das Trittbrett nutzen will. In diesem Fall wird der Fußtritt automatisch in die betretbare Position bewegt.

Weiterhin ist bevorzugt vorgesehen, dass das in der betretbaren Position befindliche Trittbrett nach einem vorgesehenen Zeitintervall durch die Steuerung in die nicht betretbare Position bringbar ist, wenn innerhalb des Zeitintervalls keine Körpergeste identifiziert ist und/oder das Trittbrett nicht betreten worden ist.

Befindet sich das Trittbrett in der unteren, betretbaren Position wird diese automatisch und ohne weitere Aktion durch die Bedienperson beim Überschreiten eines festgelegten Zeitintervalls in die nicht betretbare Position gebracht. Auch hier kann das Signal des zumindest einen optischen Sensors ausgewertet werden, insbesondere das Bild eines Kamerasystems durch Künstliche Intelligenz ausgewertet werden.

Besonders ist vorgesehen, dass das in der betretbaren Position befindliche Trittbrett in die nicht betretbare Position bringbar ist, wenn das Trittbrett unbesetzt ist und das Abfallsammelfahrzeug eine vorgesehene Grenzgeschwindigkeit überschreitet.

Beim Überschreiten einer festgelegten Geschwindigkeitsschwelle bei Vorwärtsfahrt kann das Trittbrett automatisch in die nicht benutzbare Position bewegt werden, wenn dies durch die Bedienperson vergessen worden ist. Zusätzlicher Zeitaufwand durch Anhalten, Aus- und Einsteigen und bewegen des Trittbretts entfallen.

In einer weiteren Ausführung der Erfindung überwachte der zumindest eine optische Sensor außerdem den Bereich vor einer Einfüllöffnung des Abfallsammelfahrzeugs und die Steuerung ist dazu eingerichtet, vorgesehene Betriebsparameter des Abfallsammelfahrzeugs einzustellen, sobald durch den optischen Sensor ein zu entleerender Abfallbehälter identifiziert ist, insbesondere das Volumen des Abfallbehälters oder die Abfallsorte identifiziert ist.

Durch die Nutzung optischer Sensoren und die Auswertung der dadurch gewonnenen Daten in Bezug auf Erkennung von Abfallbehältern wird ein zusätzlicher Vorteil erreicht. Je nach Abfallsorte und/oder Abfallmenge wird der Kompaktierungsmechanismus mit unterschiedlicher Presskraft betrieben. Mit Hilfe der vorliegenden Erfindung ist es möglich, diese und andere Betriebsparameter bedarfsgerecht und ohne weitere manuelle Einstellungen festzulegen, was einen weiteren zeitlichen Vorteil mit sich bringt und zudem den Betrieb das Abfallsammelfahrzeugs effizienter macht.

## Patentansprüche

1. Abfallsammelfahrzeug mit zumindest einer aktivierbaren Komponente, zumindest einem optischen Sensor zur Überwachung eines Raumbereichs, vorzugsweise am Heck des Abfallsammelfahrzeugs, einer Steuerung zum Ansteuern der aktivierbaren Komponente, die dazu eingerichtet ist, die eine oder mehrere aktivierbare Komponenten zu aktivieren oder zu desaktivieren, sobald durch den optischen Sensor eine vorgesehene Körpergeste einer Bedienperson identifiziert ist.

2. Abfallsammelfahrzeug nach Anspruch 1 **dadurch gekennzeichnet, dass** es sich bei der aktivierbaren Komponente um ein Trittbrett, eine Hub-Kipp-Vorrichtung oder einen Kompaktierungsmechanismus handelt.

3. Abfallsammelfahrzeug nach Anspruch 1 oder 2 **dadurch gekennzeichnet, dass** der zumindest eine optische Sensor oberhalb einer Einfüllöffnung des Abfallsammelfahrzeuges angeordnet ist.

4. Abfallsammelfahrzeug nach einem der Ansprüche 1 bis 3 **dadurch gekennzeichnet, dass** der zumindest eine optische Sensor als Kamera, insbesondere als 3D-Kamera ausgeführt ist.

5. Abfallsammelfahrzeug nach einem der Ansprüche 1 bis 4 **dadurch gekennzeichnet, dass** die aus dem überwachten Raumbereich erhaltenen Signale des Sensors mit Hilfe Künstlicher Intelligenz ausgewertet werden.

6. Abfallsammelfahrzeug nach einem der Ansprüche 1 bis 5 **dadurch gekennzeichnet, dass** die Körpergeste zumindest aus nachfolgenden Möglichkeiten ausgewählt ist:
• Ergreifen eines Handgriffs
• Wischbewegung mit der Hand im überwachten Raumbereich
• Antippen des Trittbretts mit dem Fuß
• Aufwärts-, Abwärts- und/oder Seitwärtsbewegung eines oder beider Hände und/oder Arme
• Kreuzen der Arme
• Herantreten an das Trittbrett
• Fingergeste.

7. Abfallsammelfahrzeug nach einem der Ansprüche 2 bis 6 mit einem motorisch betriebenen Trittbrett, das von einer nicht betretbaren in eine betretbare Position und umgekehrt bewegbar ist, zumindest einem optischen Sensor zur Überwachung eines Raumbereichs oberhalb des Trittbretts, einer Steuerung zum Ansteuern des motorisch betriebenen Trittbretts, die dazu eingerichtet ist, das Trittbrett von der nicht betretbaren in die betretbare Position und/oder umgekehrt zu bewegen, sobald durch den optischen Sensor eine vorgesehene Körpergeste einer Bedienperson identifiziert ist.

8. Abfallsammelfahrzeug nach Anspruch 7 **dadurch gekennzeichnet, dass** das in der betretbaren Position befindliche Trittbrett nach einem vorgesehenen Zeitintervall durch die Steuerung in die nicht betretbare Position bringbar ist, wenn innerhalb des Zeitintervalls keine Körpergeste identifiziert ist und/oder das Trittbrett nicht betreten worden ist.

9. Abfallsammelfahrzeug nach Anspruch 7 oder 8 **dadurch gekennzeichnet, dass** das in der betretbaren Position befindliche Trittbrett in die nicht betretbare Position bringbar ist, wenn das Trittbrett unbesetzt ist und das Abfallsammelfahrzeug eine vorgesehene Grenzgeschwindigkeit überschreitet.

10. Abfallsammelfahrzeug nach einem der Ansprüche 1 bis 9 **dadurch gekennzeichnet, dass** der zumindest eine optische Sensor außerdem den Bereich vor einer Einfüllöffnung des Abfallsammelfahrzeugs überwacht und die Steuerung dazu eingerichtet ist, vorgesehene Betriebsparameter des Abfallsammelfahrzeugs einzustellen, sobald durch den optischen Sensor ein zu entleerender Abfallbehälter identifiziert ist, insbesondere das Volumen des Abfallbehälters oder die Abfallsorte identifiziert ist.
